# EUROPÄISCHE PATENTSCHRIFT

(11) **EP 4 293 240 B1**
(45) Veröffentlichungstag und Bekanntmachung des Hinweises auf die Patenterteilung: **23.07.2025**
(21) Anmeldenummer: 23177502.4
(22) Anmeldetag: 06.06.2023
(51) Int. Cl.: F16B 5/02, F16B 13/00, F16B 35/04

(54) **NIVELLIERSYSTEM UND VERFAHREN**
LEVELLING SYSTEM AND METHOD
SYSTÈME ET PROCÉDÉ DE NIVELLEMENT

(30) Priorität: 14.06.2022 DE 102022205988
(43) Veröffentlichungstag der Anmeldung: 20.12.2023
(73) Patentinhaber: TOX-Dübel-Technik GmbH, 72505 Krauchenwies (DE)
(72) Erfinder: Seiler,, Thomas, 88639 Wald (DE); Wienert,, Florian, 88512 Mengen-Rulfingen (DE); Wilhelm,, Daniel, 88690 Uhldingen (DE)
(74) Vertreter: Gille Hrabal Partnerschaftsgesellschaft mbB Patentanwälte

(56) Entgegenhaltungen:
- DE-T2- 68 927 804
- GB-A- 2 164 073
- US-A1- 2005 050 818

## Beschreibung

Die Erfindung betrifft ein Nivelliersystem zum Einstellen eines Abstands zwischen einem Bauelement und einer Oberfläche sowie ein Verfahren zum Einstellen eines Abstands zwischen einem Bauelement und einer Oberfläche mithilfe eines Nivelliersystems.

Bauelemente wie Schwellen oder Rahmenbauteile für z.B. Fertighäuser werden üblicherweise durch Rastkeile oder Unterlegplättchen auf das passende Nivelliermaß zwecks Höhenausrichtung unterlegt.

Wegen des großen Bedarfs nach optimierten Lösungen in diesem Bereich, gibt es zunehmend alternative Nivelliersysteme, wie z.B. ein System mit einer zweiteiligen Justierscheibe mit einer oberen und einer unteren Unterlegscheibe in Verbindung mit einer Betonschraube, die einen ringförmigen Kranz am Kopf aufweist. Die Betonschraube, die durch eine Durchgangsbohrung in einem zu justierenden Element (z.B. ein Holzbalken) durchgeführt ist und in einen Untergrund darunter eingeschraubt ist, wird mit Hilfe der Justierscheibe, die an der Oberfläche des zu justierenden Elements befestigt ist, axial gehalten. Dazu liegt der Kranz der Betonschraube zwischen den beiden an der Oberfläche fixierten Unterlegscheiben. Ein Nivellieren kann dann durch Drehen der Betonschraube erfolgen.

Die US 2005/0050818 A1 zeigt ein Beispiel für ein Nivelliersystem.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, eine weiterentwickelte Lösung nebst Verfahren bereitzustellen.

Zur Lösung der Aufgabe dienen ein Nivelliersystem gemäß Anspruch 1 sowie ein Verfahren zum Einstellen eines Abstands zwischen einem Bauelement und einer Oberfläche nach Anspruch 7.

Vorteilhafte Ausführungsformen ergeben sich aus den Unteransprüchen.

Zur Lösung der Aufgabe dient ein Nivelliersystem zum Einstellen eines Abstands zwischen einem Bauelement und einer Oberfläche. Das Nivelliersystem umfasst eine Welle zum Einstellen des Abstands, eine Ankerhülse zum Verankern in einem Bauelement, und einen Auflagekörper zum Auflegen auf eine Oberfläche. Im Betrieb erstreckt sich die Welle axial zumindest teilweise durch die Ankerhülse und die Welle und die Ankerhülse sind so eingerichtet und miteinander verbunden, dass ein Drehen der Welle zu einer axialen Relativbewegung der Ankerhülse relativ zur Welle führt. Die Welle weist ein erstes Ende und ein gegenüberliegendes zweites Ende auf, das im Betrieb auf dem Auflagekörper aufliegt, so dass im Betrieb zum Einstellen des Abstands die Welle durch einen Monteur gedreht werden kann, bis ein gewünschter Abstand durch die axiale Relativbewegung eines mit der Ankerhülse verankerten Bauelements relativ zu einer den aufliegenden Auflagekörper aufweisenden Oberfläche erreicht ist.

Der Aufwand zur Montage eines Bauelements relativ zur Oberfläche kann auf diese Weise reduziert werden.

Besonders kleine Abstände von wenigen Millimetern, deren Einstellen für einen Monteur normalerweise sehr schwierig und zeitaufwändig sind, können mit dem erfindungsgemäßen Nivelliersystem mit geringem Aufwand eingestellt werden.

Der Montageaufwand wird ebenfalls durch die geringe Anzahl von Systembestandteilen reduziert. Beispielsweise hat das eingangs erwähnte System des Stands der Technik zwei Unterlegscheiben, die z.B. mithilfe von mindestens zwei kleinen Schrauben an der Oberfläche des zu justierenden Elements zu fixieren sind, sowie eine Betonschraube.

Ferner wird der Montageaufwand reduziert, weil nur ein System für eine Vielzahl von Anwendungsfällen und Materialen einsetzbar ist und hierdurch nicht mehrere Systeme erlernt zu werden brauchen, sondern das eine erfindungsgemäße System besonders schnell und effektiv eingesetzt werden kann. Einsatzfälle schließen insbesondere Justierungen einer Holzschwelle und/oder einer Fertighauswand mit Basisrahmenprofil ein. Vorzugsweise ist eine alternative oder ergänzende Anwendung eine Türrahmenjustierung, Terrassenrahmenjustierung, Aluminiumrahmenjustierung und/oder Stahlrahmenjustierung.

Darüber hinaus ermöglicht das erfindungsgemäße Nivelliersystem bei dickeren Bauelementen ein Justieren ohne nach oben überstehende Aufbauten, die nach dem Justieren zu entfernen sind. Insbesondere verbleibt das erfindungsgemäße Nivelliersystem dauerhaft im Bauteil.

Außerdem benötigt das erfindungsgemäße Nivelliersystem keine Bohrung in der Oberfläche oder sonstige Behandlung oder Bearbeitung der Oberfläche, um den Abstand einstellen zu können. Insbesondere erfordert das erfindungsgemäße Nivelliersystem lediglich eine Bohrung im Bauelement.

Zudem wird eine hohe Stabilität der Verbindung bei weniger Vorbereitungsaufwand und Fehleranfälligkeit erzielt, insbesondere gegenüber Systemen mit Betonschrauben gemäß dem eingangs beschriebenen Stands der Technik, weil bei Einsatz von Systemen mit Betonschrauben die Bohrlochtiefe der Betonschraube um die mögliche Verstellhöhe tiefer gebohrt werden muss. Insbesondere ist die Oberfläche eine Betonoberfläche, z.B. die Oberfläche eines Betonuntergrunds.

Der Montageaufwand kann ebenfalls reduziert werden, weil für das Drehen der Welle einfache Ausgestaltungen umsetzbar sind, insbesondere eine Schnittstelle für einen Inbusschlüssel oder ein Sechskant-Werkzeug. Vorzugsweise ist die Schnittstelle ein Innensechskant bzw. eine entsprechende Vertiefung.

Der Montageaufwand kann ebenfalls reduziert werden, weil der Auflagekörper kippbar gegenüber der Achse der Welle vorgesehen werden kann, so dass Abweichungen bei der Ausrichtung einer Bohrung in ein Bauelement zu einer Senkrechten zu der Oberfläche ohne Zusatzaufwand für den Monteur durch das System selbst ausgeglichen werden.

In einer Ausführungsform sind die Welle und die Ankerhülse über eine Gewindeverbindung miteinander beweglich gekoppelt. Insbesondere weist die Welle ein Außengewinde zumindest über einen Teil in axialer Ausdehnung der Welle auf. Insbesondere weist die Ankerhülse ein Innengewinde auf, das insbesondere zu dem Außengewinde der Welle passt. Das Versehen der gesamten Welle mit einem Außengewinde (mit Ausnahme des Vorsprungs) kann bevorzugt vorgesehen werden, um die Welle, insbesondere als Gewindestift, für eine optimiert reduzierte Montage kurz und kompakt zu halten.

In einer Ausführungsform weist die Welle am ersten Ende eine Kupplungsschnittstelle für ein Drehwerkzeug auf. Ein Drehwerkzeug kann eine drehfeste Verbindung zur Kupplungsschnittstelle herstellen. Bevorzugt ist die Kupplungsschnittstelle ein Innensechskant und/oder das Drehwerkzeug ein Inbusschlüssel oder ein Akkuschrauber mit einem Inbus-Bit. Vorzugsweise erstreckt sich der Innensechskant quer zur Achse der Welle mindestens über 50% und/oder höchstens über 80% des Wellen-Durchmessers. Insbesondere entspricht die axiale Tiefe der Vertiefung des Innensechskants mindestens dem doppelt und/oder höchstens dem vierfachen von dessen radialer Ausdehnung.

Erfindungsgemäß weist die Ankerhülse einen radial überstehenden Anschlag für ein axial fixiertes Verankern der Ankerhülse in einer Bohrung eines Bauelements auf. Ein reduzierter Montageaufwand kann so ermöglicht werden, weil die Ankerhülse lediglich von unten in eine Bohrung in einem Bauelement bis zum Anschlag eingeführt zu werden braucht. Die der Oberfläche zugewandte Seite des Bauelements schlägt dann gegen die der Oberfläche abgewandten Seite des Anschlags an.

Insbesondere entspricht im Betrieb die Achse der Ankerhülse der Achse der Welle, d.h., beide Mittelachsen liegen aufeinander.

In einer Ausgestaltung weist die Ankerhülse einen zylinderartigen Hauptteil mit einem im Wesentlichen oder genau konstantem Außendurchmesser auf. Insbesondere schließt sich in axialer, der Oberfläche abgewandter Richtung ein Phasenteil der Ankerhülse insbesondere einstückig und/oder stoffschlüssig an, der sich konisch verjüngt, um verbessert in einer Bohrung zentriert und eingeführt werden zu können. In axialer Richtung zur Oberfläche sind in einer Ausgestaltung der Phasenteil, der Hauptteil und der Teil mit dem radial überstehenden Anschlag angeordnet, wobei insbesondere der letztgenannte Teil das untere Ende bzw. das der Oberfläche zugewandte Ende der Ankerhülse bildet.

Vorzugsweise ist die Ankerhülse mittels Kraftschluss insbesondere zwischen dem Hauptteil der Ankerhülse und einer Bohrung in einem Bauelement auch drehfest fixiert verankert. Es kann in einer Ausgestaltung vorkommen, dass die Ankerhülse nicht durch den Hauptteil der Ankerhülse drehfest in einer Bohrung in einem Bauelement fixiert ist. Dies ist insbesondere dann möglich, wenn das Eigengewicht des Bauelements so groß ist, dass eine drehfeste Fixierung durch Reibung am Anschlag erhalten wird.

In einer Ausgestaltung ist der Anschlag an einer der Oberfläche zugewandten Seite angeordnet oder zumindest im Bereich der Oberfläche zugewandten Seite bzw. Unterseite. In einer Ausgestaltung bildet - im Querschnitt betrachtet - die Ankerhülse eine T-Form. Die axiale Länge des Hauptteils ist vorzugsweise mindestens fünf Mal und/oder höchstens zehn Mal, bevorzugt zwischen sieben und neun Mal so lang wie der Phasenteil und/oder der Teil mit dem Anschlag.

Die Dicke des Hauptteils der Ankerhülse als die Differenz aus Außenradius abzüglich Innenradius entspricht ungefähr dem radialen Überstand des Anschlags ausgehend von der Achse in radiale Richtung betrachtet, wobei der Anschlag vorzugsweise eine größere radiale Ausdehnung hat und/oder in einem Bereich von nur 30% abweicht. Gemeint ist hier die maximale, radiale Ausdehnung.

In einer Ausgestaltung erstreckt sich der radial überstehende Anschlag zumindest teilweise in Umfangrichtung um die Achse. In einer Weiterentwicklung ist der radial überstehende Anschlag ringartig, kragenartig oder ringförmig. Vorzugsweise erstreckt sich der radial überstehende Anschlag über 360°. Vorzugsweise weist der radial überstehende Anschlag einen Radius zur Mantelfläche des zylinderartigen Hauptteil Ankerhülse auf.

In einer Ausgestaltung weist der zumindest teilweise in Umfangrichtung um die Achse verlaufende radial überstehende Anschlag in axialer Richtung betrachtet einen Zweikant auf. Der Montageaufwand kann so reduziert werden, weil durch den Zweikant auch nach dem Einbringen in ein Bauelement ein Rotieren und Bewegen der Ankerhülse in der Bohrung des Bauelements mithilfe eines Werkzeugs, das drehfesten Eingriff mit dem Zweikant gebracht werden kann, ermöglicht wird. Insbesondere sind die Ausnehmungen an den Umfangsbereichen der Zweikant-Ausschnitte schlitzartig, also haben die Form eines sich axial erstreckenden Schlitzes. Vorzugsweise sind Ausnehmungen an den übrigen Umfangsbereichen in Umfangrichtung breiter, insbesondere mindestens doppelt so breit wie die Schlitze.

Insbesondere ist die Ankerhülse aus Kunststoff gefertigt. Vorzugsweise ist die Ankerhülse einstückig und/oder stoffschlüssig. In einer alternativen Ausgestaltung ist die Ankerhülse aus Metall hergestellt.

In einer Ausführungsform weist die Ankerhülse, insbesondere dessen Hauptteil, Ausnehmungen an der Mantelfläche auf. Bei einer Einbringung in eine Bohrung in einem hölzernen Bauelement wird die Ankerhülse durch elastische Verformung der hölzernen Innenfläche der Bohrung beim Einbringen kraftschlüssig drehfest verankert. Bei einer Einbringung in eine Bohrung in einem Bauelement aus Beton, Mörtel oder Putz wird können die Ausnehmungen sandartige Partikel aufnehmen, die sich beim Einbringen von der Innenfläche der Bohrung lösen und andernfalls das Einbringen blockieren oder erschweren würden. Der Montageaufwand wird durch diese Ausführungsform und Ausgestaltungen reduziert.

Insbesondere sind die Ausnehmungen rechteckförmig auf einer ausgerollten Mantelfläche der Ankerhülse. Vorzugsweise sind die Ausnehmungen in axialer Richtung in zwei Reihen angeordnet, insbesondere durch zwei Reihen mit identisch geformten und bemaßten Ausnehmungen. Hierdurch wird ein mittiger, umlaufender Steg zwischen den beiden Reihen erhalten, der die Verankerung verbessert. Vorzugsweise sind mindestens zwei oder vier und/oder höchstens sechzehn oder zwanzig Ausnehmungen in Umfangrichtung betrachtet vorgesehen. Insbesondere weisen die Ausnehmungen in Umfangrichtung gleiche Abstände auf, die axiale Stege bilden und die Verankerung verbessern. Ein Außendurchmesser der Ankerhülse insbesondere im Hauptteil der Ankerhülse wird ohne Berücksichtigung von Ausnehmungen, sondern auf Basis der Stege gemessen. Insbesondere weisen die Ausnehmungen einen Grund auf, der sich parallel zu einer Tangente am Außendurchmesser erstreckt, also eine außermittige Form bildet. Vorzugsweise sind die Ausdehnungen der Ausnehmungen in Umfangrichtung unterschiedlich groß.

In einer Ausführungsform ist die Welle mit dem Auflagekörper verliersicher verbunden, insbesondere derart, dass ein Drehen und Kippen der Welle relativ zum Auflagekörper im Betrieb erfolgen kann. Verliersicher bedeutet, dass bei einem Anheben und Verschwenken der Welle der Auflagekörper mit der Welle gekoppelt bleibt. Insbesondere ist der Auflagekörper stets mindestens an einem Punkt in einem unmittelbaren Kontakt mit der Welle. Eine verliersichere Verbindung ermöglicht bevorzugt ein Kippen von mindestens 5° und/oder höchstens 30° zu beiden Seiten einer Senkrechten, die durch die Achse der Welle verläuft und senkrecht auf eine flächige Erstreckungsebene des Auflagekörpers trifft. Bei nicht senkrecht gebohrter Bohrung in das Bauelement können auf diese Weise Verspannungen im Bauelement, die andernfalls durch das Justieren entstehen und im Bauelement verbleiben, vermieden werden. Insbesondere ist die Welle aus Metall gefertigt.

In einer Ausführungsform ist der Auflagekörper eine Platte. Ein sehr geringer Montageaufwand kann so durch einen einfachen und fehlerrobusten Aufbau erzielt werden. Insbesondere ist der Auflagekörper aus Metall gefertigt und/oder hat eine Scheibenform, um einen besonders geringen Montageaufwand durch einfaches, schnelles Positionieren mit sehr geringer Anfälligkeit für Beschädigungen beim Positionieren zu ermöglichen. In einer Ausgestaltung erstreckt sich der Auflagekörper flächig in einer Ebene, insbesondere mit einer konstanten Materialdicke (vorzugsweise zwischen 2 mm und 5 mm), wobei allgemein Phasen, entgratete Kanten, fertigungsbedingte Schwankungen innerhalb von üblichen Fertigungstoleranzen und die nachfolgend genannte, mittige Öffnung nicht zu berücksichtigen sind. Insbesondere beträgt die Materialdicke des Auflagekörpers mindestens 20% und/oder höchstens 80% des Wellendurchmessers. In einer Ausgestaltung ist die maximale Ausdehnung in der flächigen Ebene geringer als die maximale Ausdehnung der Ankerhülse, wenn die Ankerhülse bzw. dessen Achse senkrecht zu der flächigen Ebene ausgerichtet ist. In einer Ausgestaltung ist ein maximaler Außendurchmesser eines scheibenförmig ausgestalteten Auflagekörpers geringer als ein maximaler Außendurchmesser der Ankerhülse. Durch diese Ausgestaltungen kann der Montageaufwand wegen eines flexibleren und schnelleren Positionierens auf der Oberfläche reduziert werden. Insbesondere ist der Durchmesserunterschied kleiner 10 mm.

Erfindungsgemäß weist der Auflagekörper eine mittige Öffnung und die Welle an dem zweiten Ende einen sich mittig axial erstreckenden Vorsprung auf. Eine für den Monteur und den Montageaufwand besonders erleichternde verliersichere Verbindung kann auf diese Weise erzielt werden. In einer ersten Ausgestaltung hat die Öffnung einen größeren Durchmesser an der die Welle zugewandten Seite verglichen mit dem Durchmesser des Vorsprungs an einer Stirnfläche der Welle, von dem der Vorsprung axial absteht. Vorzugsweise beträgt die Durchmesserdifferenz der beiden vorgenannten Durchmesser in dieser ersten Ausgestaltung mindestens 0,1 mm, besonders bevorzugt höchstens 2 mm. In einer zweiten Ausgestaltung liegt zum Erzielen einer größeren Steifigkeit des Systems der Außenrand des Auflagekörpers mit dem oben erläuterten, größeren Durchmesser in Umfangrichtung um die Achse der Welle betrachtet zu einem Anteil von mindestens 50% oder mindestens 80% an dem Innenrand des Beginns des Vorsprungs mit dem kleineren Durchmesser unmittelbar an. Selbst bei einem Anteil von mehr als 80%, der grundsätzlich auch 95% oder 100% einschließt, kann ein relatives Kippen und Drehen der Welle zum Auflagekörper ermöglicht werden.

In einer Ausgestaltung ist der Durchmesser des Vorsprungs, insbesondere am Übergang zur Stirnfläche der Welle, größer als 1/5-tel des Wellendurchmessers und/oder kleiner als 4/5-tel des Wellendurchmessers. In einer Ausgestaltung ist die axiale Länge des Vorsprungs kleiner als die axiale Tiefe der Öffnung in dem Auflagekörper. Die Oberfläche kann so geschützt werden. In einer Ausgestaltung ist die Öffnung eine Durchgangsöffnung durch den gesamten Auflagekörper.

In einer Ausführungsform weitet sich die Öffnung des Auflagekörpers in axialer, von der Welle abgewandter Richtung auf, um einen Hinterschnitt zu bilden. Ein engster Durchmesser der Öffnung liegt in oder nahe der Oberfläche des Auflagekörpers, die der Welle zugewandt ist. Eine für den Montageaufwand im Betrieb besonders geeignete, verliersichere Verbindung kann so besonders vorteilhaft bereitgestellt werden. Insbesondere bildet die sich aufweitende Öffnung einen Hinterschnitt oder Aufweitung in Richtung der von der Welle abgewandten Seite. Vorzugsweise ist die sich aufweitende Öffnung eine Durchgangsöffnung. Die Aufweitung hinter der engsten Öffnungsfläche im der Welle zugewandten, oberen Bereich des Auflagekörpers in Achsrichtung verläuft im Längsschnitt betrachtet vorzugsweise schräg, insbesondere konisch. In einer Ausgestaltung ist der schräge Konturverlauf der Öffnung im Längsschnitt betrachtet gerade, gebogen und/oder hat gerade und gebogene Bereiche, die den Hinterschnitt bilden. Alternativ oder ergänzend sind eine stufenartige Kontur, Z-artige oder 7-artige Kontur möglich. Alle genannten Ausgestaltungen erlauben eine im Vergleich zu rein zylindrischen Öffnungen eine verbesserte Kippeigenschaft. Eine im Wesentlichen konische Form hat demgegenüber eine noch verbesserte Stabilität.

In einer Ausführungsform ist der Vorsprung an die sich in den Auflagekörper erstreckende Öffnung angepasst und/oder weist ein Spiel auf, so dass die Welle relativ zum Auflagekörper verkippen und gedreht werden kann. Insbesondere ist das Anpassen durch eine korrespondierende Längsschnittkontur realisiert, insbesondere mit einem Spiel zwischen den korrespondierenden Konturen. Vorzugsweise beträgt das Spiel weniger als 1 mm, bevorzugt weniger als 0,5 mm, besonders bevorzugt weniger als 0,3 mm, und/oder mindestens 0,1 mm. Wenn die Welle axial bei ruhendem Auflagekörper angehoben wird, entsteht ein Spalt zwischen der Stirnfläche der Welle und dem Auflagekörper von mindestens 0,1 und/oder den zuvor für das Spiel angegebenen Bereichen. In einer alternativen oder ergänzenden Ausführungsform weitet sich der Vorsprung in axialer, von der Welle abgewandter Richtung auf, so dass die Welle relativ zum Auflagekörper verkippen und gedreht werden kann.

Erfindungsgemäß wurde im Rahmen einer Herstellung des Nivelliersystems zum Verbinden des Vorsprungs mit dem Auflagekörper der Vorsprung zunächst durch einen engsten Bereich der Öffnung des Auflagekörpers geführt und der Vorsprung anschließend durch einen Umformvorgang, insbesondere einen Tauchvorgang oder ein Pressen oder Spreizen, so aufgeweitet, dass ein hierdurch zumindest teilweise vergrößerter Durchmesser oder vergrößerter Querschnittsbereich des Vorsprungs (insbesondere am zur Welle abgewandten Ende des Vorsprungs) hinter dem engsten Bereich größer als der engste Bereich der Öffnung des Auflagekörpers ist. Eine für den Montageaufwand im Betrieb besonders geeignete, verliersichere Verbindung kann so besonders vorteilhaft bereitgestellt werden.

In einer Ausgestaltung ist der Vorsprung aus einem elastischen Material, insbesondere Kunststoff, und/oder zum Verbinden des Vorsprungs mit dem Auflagekörper wird der Vorsprung im Rahmen der Herstellung zunächst durch einen engsten Bereich der Öffnung des Auflagekörpers geführt und der Vorsprung weitet sich anschließend elastisch hinter dem engsten Bereich aus oder rastet z.B. mit Hilfe eines Schnappverschlusses ein. Eine für den Montageaufwand im Betrieb besonders geeignete, verliersichere Verbindung kann so besonders vorteilhaft bereitgestellt werden.

In einer Ausgestaltung wird der Vorsprung durch einen zylindrischen Bolzen realisiert, der fest mit einer axialen Bohrung in der Stirnfläche der Welle verbunden ist. In einer alternativen Ausgestaltung wird eine Schraube mit einem aufgeweiteten Schraubenkopf oder ein Bolzen mit einer in axialer Richtung größer werdenden Querschnittsfläche, die größer sind als der engste Bereich der Öffnung verwendet. Im Rahmen der Herstellung wird von der Welle abgewandten Seite aus die Schraube oder der Bolzen mit dem schmalen Ende, dessen Durchmesser kleiner als der engste Bereich der Öffnung ist, durch die Öffnung geführt und fest mit der Welle verbunden, jedoch derart, dass ein Spiel zwischen der Welle und dem Auflagekörper erhalten bleibt. Ein unabhängiger Aspekt der Erfindung betrifft ein Herstellungsverfahren mit den Verfahrensmerkmalen der Ausführungsformen und Ausgestaltungen dieses Absatzes. In einer Ausgestaltung des Verfahrens wird der Vorsprung durch eine spanende Drehbearbeitung erzielt, insbesondere in einem gemeinsamen Bearbeitungsgang an einer Drehmaschine, der ebenfalls das Gewindeschneiden umfasst. In einer Ausgestaltung wird die für das Drehen an einer Drehmaschine erforderliche Einbuchtung an der Stirnseite der Welle synergetisch für das zentrierte Aufspreizen durch den Umformvorgang genutzt.

Ein weiterer Aspekt der Erfindung betrifft ein Verfahren zum Einstellen eines Abstands zwischen einem Bauelement und einer Oberfläche mithilfe eines Nivelliersystems, insbesondere das Nivelliersystem gemäß der eingangs beschriebenen Lösung der Aufgabe. Das Nivelliersystem umfasst eine Welle, eine Ankerhülse und einen Auflagekörper, wobei sich im Betrieb die Welle axial zumindest teilweise durch die Ankerhülse erstreckt und die Welle und die Ankerhülse so eingerichtet und miteinander verbunden sind, dass ein Drehen der Welle zu einer axialen Relativbewegung der Ankerhülse relativ zur Welle führt. Das erfindungsgemäße Verfahren gemäß diesem Aspekt der Erfindung umfasst folgende Schritte:
- Verankern einer Ankerhülse des Nivelliersystems in dem Bauelement von einer der Oberfläche zugewandten Seite aus;
- Auflegen eines Auflagekörpers des Nivelliersystems auf die Oberfläche;
- Drehen einer Welle des Nivelliersystems von einer der Oberfläche abgewandten Seite aus, bis ein gewünschter Abstand erreicht ist.

Der Aufwand zur Montage eines Bauelements relativ zur Oberfläche kann auf diese Weise reduziert werden.

Insbesondere beinhaltet das Verankern das Einführen der Ankerhülse in eine Bohrung des Bauelements. In einer Ausgestaltung wir die Ankerhülse separat eingeführt und anschießend die Welle in die Ankerhülse gedreht. In einer alternativen Ausgestaltung wird die Ankerhülse zusammen mit der Welle in die Bohrung eingebracht. In einer Ausgestaltung beinhaltet ein Schritt vor dem Verankern das Erzeugen einer Bohrung in dem Bauelement, insbesondere eine zumindest teilweise Durchgangsbohrung.

Insbesondere beinhaltet das Drehen der Welle im eingebrachten Zustand der Ankerhülse in dem Bauelement das Anbringen eines Drehwerkzeugs in eine Kupplungsschnittstelle an dem ersten Ende der Welle, insbesondere in dessen Stirnfläche. Das Drehwerkzeugs wird von der Seite der Bohrung eingeführt, die der Oberfläche entgegengesetzt ist. Der Montageaufwand kann so reduziert werden. Vorzugsweise ist ein Drehen in beide Richtungen möglich, so dass die axiale Relativbewegung in beide axiale Richtungen erfolgen kann. Nach erfolgter Einstellung des Abstands braucht das Drehwerkzeug nur noch entfernt zu werden. Die Nivellierung ist dann abgeschlossen.

Die oben anhand des Nivelliersystem gemäß der eingangs beschriebenen Lösung der Aufgabe im Detail beschriebenen Wirkungen, Vorteile, Ausgestaltungen und Definitionen sind auch auf diesen Verfahrensaspekt der Erfindung übertragbar und analog damit kombinierbar.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung eines erfindungsgemäßen Nivelliersystems;
- Figur 2:: Schematische Darstellung eines erfindungsgemäßen Nivelliersystems in Querschnittdarstellung;
- Figur 2a:: Schematische Detaildarstellung einer weiteren Ausgestaltung der Verbindung zwischen der Welle und dem Auflagekörper;
- Figur 3:: Schematische Darstellung eines erfindungsgemäßen Nivelliersystems im Betrieb während des Einstellens des Abstands zwischen einem Bauelement und einer Oberfläche.

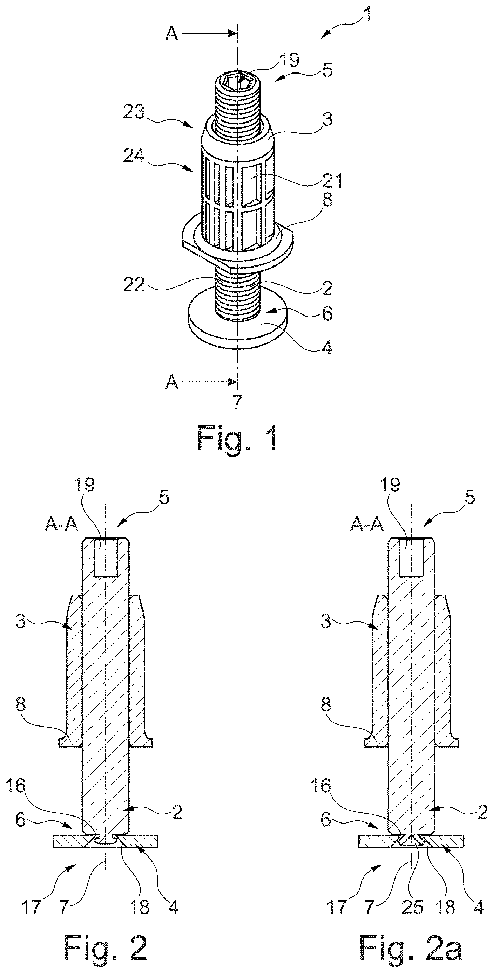

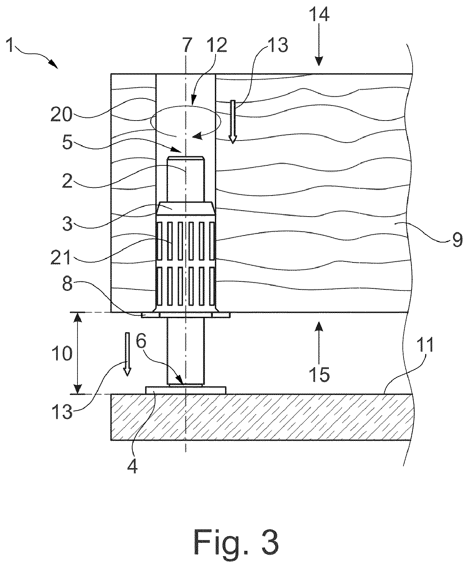

Die Figuren 1, 2 und 3 zeigen jeweils ein Nivelliersystem 1 zum Einstellen eines Abstands 10 zwischen einem Bauelement 9, z.B. ein Rahmenbalken einer Fertighauswand, und einer Oberfläche 11, z.B. eine Betonuntergrund. Ein Bauelement 9 und eine Oberfläche 11 sind exemplarisch in Fig. 3 gezeigt.

Eine Welle 2 zum Einstellen des Abstands 10 erstreckt sich durch eine Ankerhülse 3, die zum Verankern in einem Bauelement 9 vorgesehen ist. Die Welle 2 setzt mit dessen Stirnseite am zweiten Ende 5 der Welle 2 auf dem Auflagekörper 4 auf, der insbesondere durch eine Scheibe gebildet wird.

Der Auflagekörper 4 liegt bevorzugt plan auf einer insbesondere ebenen Oberfläche 11 auf.

Im Betrieb wird die Welle 2 über dessen erstes Ende 5 insbesondere unter Einsatz eines nicht dargestellten Drehwerkzeugs auf dem Auflagekörper 4 gedreht. Dabei reibt das zweite Ende 6 der Welle 2 auf dem Auflagekörper 4. Normalerweise ruht der Auflagekörper 4 dabei infolge der flächigen Auflage auf der Oberfläche 11, weil die Reibkräfte zwischen dem Auflagekörper 4 und der Oberfläche 11 typischerweise größer sind als die Reibkräfte zwischen der Welle 2 und dem Auflagekörper. Falls sich der Auflagekörper 4 unter bestimmten Umständen beim Drehen der Welle 2 relativ zur Oberfläche 11 mitdrehen sollte, wird die Einstellung des Abstands 10 hiervon nicht beeinträchtigt.

Durch die vorgesehene Umwandlung von einer Drehbewegung in eine relative axiale Bewegung zwischen der Ankerhülse 3 und dem Auflagekörper 4 bzw. eines Drehmoments in eine axiale Translationskraft kann ein Monteur den gewünschten Abstand 10 mit geringem Aufwand einstellen. Die Welle 2 verläuft koaxial entlang einer Achse 7 zur Ankerhülse 3. Die Drehung erfolgt um die Achse 7. Die Translation erfolgt entlang der Achse 7.

Die Figur 1 illustriert das Gewinde 22 der Welle 2, insbesondere M12. Die Ankerhülse 3 hat ein nicht dargestelltes, entsprechendes Gegengewinde, insbesondere M12.

Vorzugsweise ist die an der Stirnfläche des ersten Endes 5 der Welle 2 als Vertiefung eingebrachte Kupplungsschnittstelle 19 bevorzugt als ein Innensechskant ausgestaltet, vorzugsweise ein SW6 Sechskant.

Ebenfalls anschaulich in Fig. 1 illustriert wird der Aufbau der insbesondere aus Kunststoff gefertigten und/oder spritzgegossenen Ankerhülse 3, der an der unteren Seite einen radial überstehenden Anschlag 8 hat, der sich kranzartig in Umfangrichtung erstreckt, wobei insbesondere ein Zweikant in den ansonsten ringförmigen Anschlag geschnitten ist. Ein Zweikant wird bevorzugt durch zwei gegenüberliegende, tangentiale Kanten erzeugt, deren Abstand gering ist als der Durchmesser des ringförmigen Anschlags, aus dem der Zweikant ausgeschnitten ist.

Der Hauptteil 24, der zwischen dem konischen Phasenteil 23 im oberen Bereich und dem radial überstehenden Anschlag 8 an der Unterseite angeordnet ist, weist an der äußeren Mantelfläche Ausnehmungen 21 auf.

Die Figur 2 zeigt ein Nivelliersystem 1 im Querschnitt. Die Mittel zum Übertragen einer Drehung der Welle 2 in eine Translation und Veränderung des Abstands zwischen der Ankerhülse 3 und dem Auflagekörper 4 ist in Fig. 2 ausgeblendet. Es kann jedoch dennoch bevorzugt eine Gewindeverbindung in der Ausgestaltung der Fig. 2 vorgesehen werden, die in Fig. 1 zumindest teilweise gezeigt ist.

Anschaulich illustriert wird in Fig. 2 eine verliersichere Verbindung zwischen der Welle 2 und dem Auflagekörper 4. Ein Vorsprung 17, der durch die sich aufweitende, insbesondere konische, Öffnung 16 zum Bilden eines Hinterschnitts 18 verläuft, ist insbesondere durch ein Umformverfahren in den hinterschnittenen Raum des Hinterschnitts 18 zum Erhalten einer Aufweitung hinter dem engsten Bereich der Öffnung 16 umgeformt, so dass die Welle 2 nicht mehr zerstörungsfrei oder manuell von dem Auflagekörper entfernt werden kann. In einer Ausgestaltung weisen die Ausgestaltungen der Fig. 1 und/oder 3 ebenfalls die in Fig. 2 oder Fig. 2a gezeigte, verliersichere Verbindung auf.

Die Fig. 2a zeigt eine Ausgestaltung, bei der eine mittige Einbuchtung 25 an der freien Stirnseite des Vorsprungs 17 eingebracht ist, die vor dem Umformen zylindrisch oder konisch war. Nach dem Umformen, insbesondere einem Aufspreizen durch eine axiale Umformwerkzeugbewegung in Richtung 15, hat die Einbuchtung 25 eine konische Form angenommen und der Vorsprung 17 ist aufgeweitet, bevorzugt konisch. Ein Spalt von mindestens 0,1 mm, bevorzugt mindestens 0,2 mm, ist zwischen dem konisch aufgespreizten Abschnitt des Vorsprungs 17 und der Kontur des Hinterschnitts 18 des Auflagekörpers 4 vorgesehen, um ein hinreichendes Verkippen zu ermöglichen.

In Fig. 2 weist der Vorsprung 17 an der freien Stirnseite keine Einbuchtung auf. Der insbesondere zylindrische Vorsprung 17 wird durch ein Presswerkzeug, dass axial in Richtung 15 auf das freie Ende des Vorsprungs 17 einwirkt, mittels Stauchung in Querrichtung aufgeweitet. Das Stauchen belässt einen engsten Spalt von mindestens 0,1 mm, bevorzugt mindestens 0,2 mm, zwischen dem Vorsprung 17 und der den Hinterschnitt 18 bildenden Öffnung 16 des Auflagekörpers 4, um ein hinreichendes Verkippen zu ermöglichen.

Die Fig. 2 zeigt, dass die Welle 2 auf einer ringförmigen Fläche aufliegt, die dem Wellenquerschnitt abzüglich der Fläche des Vorsprungs (zuzüglich des Spiels) entspricht. Wenn die Welle 2 nicht ideal senkrecht zum Auflagekörper orientiert ist, liegt die Welle 2 nur auf einem Teil dieser Fläche auf. Auch in einer solchen Kippstellung wird das Einstellen des Abstands 10 nicht beeinträchtigt.

Ebenfalls in Fig. 2 gezeigt wird die Kupplungsschnittstelle 19, z.B. in Form einer Sechskantvertiefung.

Die Figur 3 illustriert das Einstellen des Abstands 10 zwischen einem Bauelement 9, das z.B. aus Holz ist, und einer Oberfläche 11, die z.B. aus Beton ist, mithilfe des erfindungsgemäßen Nivelliersystems 1 im Betrieb, das insbesondere das Systems der Fig. 1 und/oder Fig. 2 in vereinfachter Darstellung sein kann.

Zunächst wird nachfolgend erläutert, wie ein Monteur das Nivelliersystems 1 zum Einsatz bringt. Als erstes wird eine Bohrung 20 in das Bauelement 9 gebohrt, falls noch keine passende Bohrung 20 vorhanden ist. Die Bohrung 20 weist bevorzugt eine Presspassung oder Übergangspassung zur Ankerhülse 3, insbesondere zum Durchmesser von dessen Hauptteil 24, auf. Anschließend verankert der Monteur die Ankerhülse 3 des Nivelliersystems 1 in dem Bauelement 9 von einer der Oberfläche 11 zugewandten Seite 15 aus, indem er die Ankerhülse 3 in die Bohrung 20 drückt, bis diese an den Anschlag 8 anstößt. Gegebenenfalls kann hierfür ein Werkzeug wie z.B. ein Hammer zum Reintreiben und/oder ein Schraubenschlüssel zum Bewegen der Ankerhülse 3 innerhalb der Bohrung 20 nach dem teilweise oder vollständigen Einbringen zur Hilfe genommen werden. Falls das Einfügen der Ankerhülse ohne die Welle 2 erfolgte, wir nun die Welle 2 in die Ankerhülse 3 geschraubt. Andernfalls ist die Welle 2 bereits durch die Ankerhülse geführt.

Nach dem Verankern wird der Auflagekörpers 4 des Nivelliersystems 1 auf die Oberfläche 11 aufgelegt. Zum Einstellen des gewünschten Abstands 10 kann der Monteur das entsprechende Drehwerkzeug, das nicht dargestellt ist, von der Oberfläche 11 abgewandten Seite 14 aus durch die Bohrung 20 mit der Welle 2 drehfest koppeln. Durch ein Drehen 12 der Welle 2 in die eine oder andere Richtung mithilfe des Drehwerkzeugs kann der Monteur gezielt eine axiale Relativbewegung 13 zwischen dem auf dem Anschlag 8 flächig anliegenden Bauelement 9 und der Oberfläche 11 schnell, einfach und präzise bewirken, bis der gewünschte Abstand 10 erreicht ist.

Insbesondere weist auch die Welle 2 der Fig. 2 und/oder 3 eine Gewindeverbindung mit der Ankerhülse 3 insbesondere wie in der Ausgestaltung der Fig. 1. Alternativ ist auch eine andere Dreh-Translations-Kopplung einsetzbar, z.B. mithilfe einer Kulisse oder eines Getriebes. obwohl dies nicht dargestellt ist. In einer Ausgestaltung hat die Welle 2 der Fig. 3 ein Gewinde nur auf einem Bereich in axialer Richtung, der von der Ankerhülse 3 in Fig. 3 verdeckt wird.

Insbesondere beträgt die Gesamtlänge der Welle 2 oder der Welle 2 und des Auflagekörpers 4 zusammen genommen mindestens 30 mm und/oder höchstens 100 mm, bevorzugt mindestens 40 mm und/oder höchstens 60 mm. Insbesondere beträgt der Durchmesser des Anschlags 8 mindestens 25 mm und/oder höchstens 40 mm. Vorzugsweise hat die Bohrung 20 zur Aufnahme der Ankerhülse 3 einen Durchmesser von mindestens 15 mm und/oder höchstens 20 mm.

Vorzugsweise beträgt die Dicke des Auflagekörpers 4 mindestens 2 mm und/oder höchstens 6 mm. Der Auflagekörper verteilt die Last gleichmäßig auf der Oberfläche und vermeidet Materialabrieb von der Oberfläche und somit ein je nach Oberfläche Eindringen der Welle in die Oberfläche, was den Montageaufwand erhöhen würde. Insbesondere ist der Anschlag 8 dünner als Auflagekörper 4. In einer Ausgestaltung kann der Auflagekörper 4 von der Welle 2 manuell entfernbar oder als nichtverbundene Systemkomponente vorgesehen sein, auf das die Welle 2 im Betrieb jedoch unmittelbar aufliegt. Vorzugsweise hat der Anschlag 8 eine Dicke von mindestens 2 mm und/oder höchstens 5 mm. Vorzugsweise ist bei Vorsehen eines Zweikant ein radial überstehender Anschlag von mindestens 2 mm und/oder höchstens 4 mm vorgesehen. Insbesondere wird der Abstand 10 zwischen den beiden gegenüberliegenden Seiten oder Flächen des Bauelements 9 und der Oberfläche 11 gemessen. Vorzugsweise ermöglicht das Nivelliersystem 1 einen Mindestabstand von wenigen Millimetern, z.B. 3 mm oder 5 mm. Der Mindestabstand wird begrenzt durch die Summe der Dicken des Anschlags und des Auflagekörpers.

Insbesondere erlaubt das Nivelliersystem eine Skalierung hinsichtlich der Abmessungen der Systemkomponenten wie z.B. Welle und Ankerhülse entsprechend der Größe und des Gewichts des Bauelements. Auf diese Weise können beispielsweise auch schwere Wände mit dem Nivelliersystem nivelliert werden.

### Bezugszeichenliste:

1 Nivelliersystem
2 Welle
3 Ankerhülse
4 Auflagekörper
5 erstes Ende der Welle
6 zweites Ende der Welle
7 Achse
8 Anschlag
9 Bauelement
10 Abstand
11 Oberfläche
12 Drehen
13 axiale Relativbewegung
14 die der Oberfläche abgewandte Seite
15 die der Oberfläche zugewandte Seite
16 Öffnung
17 Vorsprung
18 Hinterschnitt
19 Kupplungsschnittstelle
20 Bohrung
21 Ausnehmungen
22 Gewinde
23 Phasenteil
24 Hauptteil
25 Einbuchtung

## Patentansprüche

1. Nivelliersystem (1) zum Einstellen eines Abstands (10) zwischen einem Bauelement (9) und einer Oberfläche (11), umfassend eine Welle (2) zum Einstellen des Abstands (10), eine Ankerhülse (3) zum Verankern in einem Bauelement (9) und einen Auflagekörper (4) zum Auflegen auf eine Oberfläche (11), wobei sich im Betrieb die Welle (2) axial zumindest teilweise durch die Ankerhülse (3) erstreckt und die Welle (2) und die Ankerhülse (3) so eingerichtet und miteinander verbunden sind, dass ein Drehen (12) der Welle (2) zu einer axialen Relativbewegung (13) der Ankerhülse (3) relativ zur Welle (2) führt, wobei die Welle (2) ein erstes Ende (5) und ein gegenüberliegendes zweites Ende (6) aufweist, das im Betrieb auf dem Auflagekörper (4) aufliegt, so dass im Betrieb zum Einstellen des Abstands (10) die Welle (2) durch einen Monteur gedreht werden kann, bis ein gewünschter Abstand (10) durch die axiale Relativbewegung (13) eines mit der Ankerhülse (3) verankerten Bauelements (9) relativ zu einer den aufliegenden Auflagekörper (4) aufweisenden Oberfläche (11) erreicht ist, wobei die Ankerhülse (3) einen radial überstehenden Anschlag (8) für ein axial fixiertes Verankern der Ankerhülse (3) in einer Bohrung (20) eines Bauelements (9) aufweist und das Nivelliersystem (1) so eingerichtet ist, dass die Ankerhülse (3) lediglich von unten in die Bohrung (20) des Bauelements (9) bis zum Anschlag (8) eingeführt zu werden braucht, so dass die der Oberfläche (11) zugewandte Seite (15) des Bauelements (9) gegen die der Oberfläche (11) abgewandten Seite des Anschlags (8) anschlägt, wobei der Auflagekörper (4) eine mittige Öffnung (16) und die Welle (2) an dem zweiten Ende (6) einen sich mittig axial erstreckenden Vorsprung (17) aufweisen zum Verbinden des Vorsprungs (17) mit dem Auflagekörper (4), wobei der Vorsprung (17) so beschaffen ist, dass im Rahmen einer Herstellung des Nivelliersystems (1) der Vorsprung (17) zunächst durch einen engsten Bereich der Öffnung (16) des Auflagekörpers (4) geführt wurde und der Vorsprung (17) anschließend so aufgeweitet wurde, dass ein hierdurch vergrößerter Durchmesser des Vorsprungs (17) hinter dem engsten Bereich größer als der engste Bereich der Öffnung (16) des Auflagekörpers (4) ist.

2. Nivelliersystem (1) nach Anspruch 1, **dadurch gekennzeichnet, dass** die Welle (2) mit dem Auflagekörper (4) verliersicher verbunden ist, derart, dass ein Drehen (12) und Kippen der Welle (2) relativ zum Auflagekörper (4) im Betrieb erfolgen kann.

3. Nivelliersystem (1) nach einem der vorhergehenden Ansprüche, **dadurch gekennzeichnet, dass** der Auflagekörper (4) eine Platte ist, insbesondere mit einer Scheibenform.

4. Nivelliersystem (1) nach dem vorhergehenden Anspruch, **dadurch gekennzeichnet, dass** die Öffnung (16) des Auflagekörpers (4) sich in axialer, von der Welle (2) abgewandter Richtung aufweitet, um einen insbesondere konischen Hinterschnitt (18) zu bilden.

5. Nivelliersystem (1) nach einem der vorhergehenden Ansprüche, **dadurch gekennzeichnet, dass** der Vorsprung (17) an die sich in den Auflagekörper (4) erstreckende Öffnung (16) angepasst ist und/oder sich in axialer, von der Welle (2) abgewandter Richtung aufweitet, so dass die Welle (2) relativ zum Auflagekörper (4) verkippen und gedreht werden kann.

6. Nivelliersystem (1) nach einem der vorhergehenden Ansprüche, **dadurch gekennzeichnet, dass** die Welle (2) und die Ankerhülse (3) über eine Gewindeverbindung miteinander beweglich gekoppelt sind, und/oder die Welle (2) am ersten Ende (5) eine Kupplungsschnittstelle für ein Drehwerkzeug aufweist.

7. Verfahren zum Herstellen eines Nivelliersystems (1) zum Einstellen eines Abstands (10) zwischen einem Bauelement (9) und einer Oberfläche (11) mithilfe des Nivelliersystems (1), wobei das Nivelliersystems (1) eine Welle (2), eine Ankerhülse (3) und einen Auflagekörper (4) umfasst, wobei sich im Betrieb die Welle (2) axial zumindest teilweise durch die Ankerhülse (3) erstreckt und die Welle (2) und die Ankerhülse (3) so eingerichtet und miteinander verbunden sind, dass ein Drehen (12) der Welle (2) zu einer axialen Relativbewegung (13) der Ankerhülse (3) relativ zur Welle (2) führt, wobei die Ankerhülse (3) einen radial überstehenden Anschlag (8) für ein axial fixiertes Verankern der Ankerhülse (3) in eine Bohrung (20) des Bauelements (9) aufweist, wobei der Auflagekörper (4) eine mittige Öffnung (16) und die Welle (2) an dem zweiten Ende (6) einen sich mittig axial erstreckenden Vorsprung (17) aufweist zum Verbinden des Vorsprungs (17) mit dem Auflagekörper (4), wobei zum Einstellen des Abstands (10) zwischen einem Bauelement (9) und einer Oberfläche (11) ein Verankern der Ankerhülse (3) des Nivelliersystems (1) in dem Bauelement (9) von einer der Oberfläche (11) zugewandten Seite (15) aus erfolgt, indem die Ankerhülse (3) von unten in eine Bohrung (20) des Bauelements (9) bis zum Anschlag (8) eingeführt wird, so dass die der Oberfläche (11) zugewandte Seite (15) des Bauelements (9) gegen die der Oberfläche (11) abgewandten Seite des Anschlags (8) anschlägt, der Auflagekörper (4) des Nivelliersystems (1) auf die Oberfläche (11) aufgelegt wird und die Welle (2) des Nivelliersystems (1) von einer der Oberfläche (11) abgewandten Seite (14) aus gedreht wird, bis ein gewünschter Abstand (10) erreicht ist, wobei das Verfahren zur Herstellung des Nivelliersystems (1) ein Führen des Vorsprungs (17) zunächst durch einen engsten Bereich der Öffnung (16) des Auflagekörpers (4) vorsieht und anschließend ein Aufweiten des Vorsprungs (17) derart, dass ein hierdurch vergrößerter Durchmesser des Vorsprungs (17) hinter dem engsten Bereich größer als der engste Bereich der Öffnung (16) des Auflagekörpers (4) ist.

## Claims

1. Levelling system (1) for adjusting a distance (10) between a component (9) and a surface (11), comprising a shaft (2) for adjusting the distance (10), an anchor sleeve (3) for anchoring in a component (9) and a support body (4) for resting on a surface (11), wherein, in operation, the shaft (2) extends axially at least partially through the anchor sleeve (3) and the shaft (2) and the anchor sleeve (3) are configured and connected to one another such that a rotation of the shaft (2) leads to an axial relative movement of the anchor sleeve (3) relative to the shaft (2), wherein the shaft (2) has a first end (5) and an opposite second end (6) which, in operation, rests on the support body (4) so that, in operation, the shaft (2) can be rotated by an installer in order to adjust the distance (10) until a desired distance (10) is reached by the axial relative movement (13) of a component (9) anchored to the anchor sleeve (3) relative to a surface (11) comprising the support body (4) resting thereon, wherein the anchor sleeve (3) has a radially protruding stop (8) for axially fixed anchoring of the anchor sleeve (3) in a bore (20) of a component (9) and the levelling system (1) is configured such that the anchor sleeve (3) only needs to be inserted from below into the bore (20) of the component (9) to the stop (8) so that the side (15) of the component (9) facing the surface (11) abuts against the side of the stop (8) facing away from the surface (11), wherein the support body (4) has a central opening (16) and the shaft (2) has a centrally axially extending projection (17) at the second end (6) for connecting the projection (17) to the support body (4), wherein the projection (17) is designed such that, during production of the levelling system (1), the projection (17) has first been passed through a narrowest region of the opening (16) of the support body (4) and the projection (17) has then been widened such that that a diameter of the projection (17) behind the narrowest region, which is enlarged as a result, is greater than the narrowest region of the opening (16) of the support body (4).

2. Levelling system (1) according to claim 1, **characterised in that** the shaft (2) is connected to the support body (4) in a captive manner in such a way that the shaft (2) can be rotated (12) and tilted relative to the support body (4) during operation.

3. Levelling system (1) according to one of the preceding claims, **characterised in that** the support body (4) is a plate, in particular with a disc shape.

4. Levelling system (1) according to one of the preceding claims, **characterised in that** the opening (16) of the support body (4) widens in the axial direction facing away from the shaft (2) in order to form an undercut (18), in particular a conical undercut.

5. Levelling system (1) according to one of the preceding claims, **characterised in that** the projection (17) is adapted to the opening (16) extending into the support body (4) and/or widens in the axial direction facing away from the shaft (2), so that the shaft (2) can tilt and be rotated relative to the support body (4).

6. Levelling system (1) according to one of the preceding claims, **characterised in that** the shaft (2) and the anchor sleeve (3) are movably coupled to one another via a threaded connection, and/or the shaft (2) has a coupling interface for a rotating tool at the first end (5).

7. Method for producing a levelling system (1) for adjusting a distance (10) between a component (9) and a surface (11) by means of the levelling system (1), wherein the levelling system (1) comprises a shaft (2), an anchor sleeve (3) and a support body (4), wherein in operation the shaft (2) extends axially at least partially through the anchor sleeve (3) and the shaft (2) and the anchor sleeve (3) are configured and connected to one another such that a rotation (12) of the shaft (2) leads to an axial relative movement (13) of the anchor sleeve (3) relative to the shaft (2), wherein the anchor sleeve (3) has a radially protruding stop (8) for an axially fixed anchoring of the anchor sleeve (3) in a bore (20) of the component (9), wherein the support body (4) has a central opening (16) and the shaft (2) has a projection (17) extending centrally axially at the second end (6) for connecting the projection (17) to the support body (4), wherein the anchor sleeve (3) of the levelling system (1) is anchored in the component (9) from a side (15) facing the surface (11) in order to adjust the distance (10) between a component (9) and a surface (11), by inserting the anchor sleeve (3) from below into a bore (20) of the component (9) up to the stop (8), so that the side (15) of the component (9) facing the surface (11) abuts against the side of the stop (8) facing away from the surface (11), the support body (4) of the levelling system (1) is placed on the surface (11) and the shaft (2) of the levelling system (1) is rotated from a side (14) facing away from the surface (11) until a desired distance (10) is reached, wherein the method for producing the levelling system (1) provides for the projection (17) to first be guided through a narrowest region of the opening (16) of the support body (4) and then for the projection (17) to be widened such that a diameter of the projection (17) behind the narrowest region, which is enlarged as a result, is greater than the narrowest region of the opening (16) of the support body (4).

## Revendications

1. Système de nivellement (1) pour régler une distance (10) entre un élément de construction (9) et une surface (11), comprenant un arbre (2) pour régler la distance (10), une douille d'ancrage (3) pour l'ancrage dans un élément de construction (9) et un corps d'appui (4) à reposer sur une surface (11), dans lequel, en fonctionnement, l'arbre (2) s'étend axialement au moins partiellement à travers la douille d'ancrage (3) et l'arbre (2) et la douille d'ancrage (3) sont aménagés et reliés entre eux de telle sorte, qu'une rotation (12) de l'arbre (2) entraîne un mouvement relatif axial (13) de la douille d'ancrage (3) par rapport à l'arbre (2), dans lequel l'arbre (2) présente une première extrémité (5) et une deuxième extrémité opposée (6) qui, en fonctionnement, repose sur le corps d'appui (4), de sorte qu'en fonctionnement, pour régler la distance (10), l'arbre (2) peut être tourné par un monteur jusqu'à ce qu'une distance souhaitée (10) est atteinte par le mouvement relatif axial (13) d'un élément de construction (9) ancré avec la douille d'ancrage (3) par rapport à une surface (11) présentant le corps d'appui (4) reposé dessus, dans lequel
la douille d'ancrage (3) présente une butée (8) dépassant radialement pour un ancrage fixé axialement de la douille d'ancrage (3) dans un alésage (20) d'un élément de construction (9) et le système de nivellement (1) est aménagé de telle sorte, qu'il suffit d'introduire la douille d'ancrage (3) par le bas dans l'alésage (20) de l'élément de construction (9) jusqu'à la butée (8), de sorte que le côté (15) de l'élément de construction (9) tourné vers la surface (11) bute contre le côté de la butée (8) détourné de la surface (11), dans lequel le corps d'appui (4) présente une ouverture au centre (16) et l'arbre (2) présente à la deuxième extrémité (6) une saillie (17) s'étendant axialement au centre pour relier la saillie (17) au corps d'appui (4), dans lequel la saillie (17) est telle, que, dans le cadre d'une fabrication du système de nivellement (1), la saillie (17) a d'abord été guidée à travers une zone la plus étroite de l'ouverture (16) du corps d'appui (4) et la saillie (17) a ensuite été élargie de telle sorte qu'un diamètre ainsi agrandi de la saillie (17) derrière la zone la plus étroite est supérieur à la zone la plus étroite de l'ouverture (16) du corps d'appui (4).

2. Système de nivellement (1) selon la revendication 1, **caractérisé en ce que** l'arbre (2) est relié au corps d'appui (4) de manière à ne pas pouvoir être perdu, de telle sorte qu'une rotation (12) et un basculement de l'arbre (2) par rapport au corps d'appui (4) peuvent avoir lieu en cours de fonctionnement.

3. Système de nivellement (1) selon l'une des revendications précédentes, **caractérisé en ce que** le corps d'appui (4) est une plaque, en particulier avec une forme de disque.

4. Système de nivellement (1) selon la revendication précédente, **caractérisé en ce que** l'ouverture (16) du corps d'appui (4) s'élargit dans la direction axiale détournée de l'arbre (2) pour former une contre-dépouille (18) notamment conique.

5. Système de nivellement (1) selon l'une des revendications précédentes, **caractérisé en ce que** la saillie (17) est adaptée à l'ouverture (16) s'étendant dans le corps d'appui (4) et/ou s'élargit dans la direction axiale détournée de l'arbre (2), de sorte que l'arbre (2) peut être incliné et tourné par rapport au corps d'appui (4).

6. Système de nivellement (1) selon l'une des revendications précédentes, **caractérisé en ce que** l'arbre (2) et la douille d'ancrage (3) sont couplés l'un à l'autre de manière mobile par une liaison filetée, et/ou l'arbre (2) présente à la première extrémité (5) une interface d'accouplement pour un outil de rotation.

7. Procédé de fabrication d'un système de nivellement (1) pour régler une distance (10) entre un élément de construction (9) et une surface (11) à l'aide du système de nivellement (1), dans lequel le système de nivellement (1) comprend un arbre (2), une douille d'ancrage (3) et un corps d'appui (4), dans lequel, en fonctionnement, l'arbre (2) s'étend axialement au moins partiellement à travers la douille d'ancrage (3) et l'arbre (2) et la douille d'ancrage (3) sont aménagés et reliés entre eux de telle sorte, qu'une rotation (12) de l'arbre (2) entraîne un mouvement relatif axial (13) de la douille d'ancrage (3) par rapport à l'arbre (2), dans lequel la douille d'ancrage (3) présente une butée (8) dépassant radialement pour un ancrage fixé axialement de la douille d'ancrage (3) dans un alésage (20) de l'élément de construction (9), dans lequel le corps d'appui (4) présente une ouverture au centre (16) et l'arbre (2) présente à la deuxième extrémité (6) une saillie (17) s'étendant axialement au centre pour relier la saillie (17) au corps d'appui (4), dans lequel, pour régler la distance (10) entre un élément de construction (9) et une surface (11), on procède à un ancrage de la douille d'ancrage (3) du système de nivellement (1) dans l'élément de construction (9) à partir d'un côté (15) tourné vers la surface (11), en introduisant la douille d'ancrage (3) par le bas dans un alésage (20) de l'élément de construction (9) jusqu'à la butée (8), de sorte que le côté (15) de l'élément de construction (9) tourné vers la surface (11) bute contre le côté de la butée (8) détourné de la surface (11), le corps d'appui (4) du système de nivellement (1) est reposé sur la surface (11) et l'arbre (2) du système de nivellement (1) est tourné à partir d'un côté (14) détourné de la surface (11) jusqu'à ce qu'une distance souhaitée (10) est atteinte, dans lequel le procédé de fabrication du système de nivellement (1) prévoie un guidage de la saillie (17) d'abord à travers une zone la plus étroite de l'ouverture (16) du corps d'appui (4) et ensuite un élargissement de la saillie (17) de telle sorte qu'un diamètre ainsi agrandi de la saillie (17) derrière la zone la plus étroite est plus grand que la zone la plus étroite de l'ouverture (16) du corps d'appui (4).
